# EUROPEAN PATENT APPLICATION

(11) **EP 3 569 720 A1**
(43) Date of publication of application: **20.11.2019**
(21) Application number: 17891765.4
(22) Date of filing: 27.06.2017
(51) Int. Cl.: C22B 34/22, C22B 3/44, C22B 3/26, B01D 11/04

(54) **SYSTEM FOR EXTRACTING VANADIUM FROM LEACHING SOLUTION CONTAINING VANADIUM CHROMIUM SILICON AND FOR PREPARING VANADIUM PENTOXIDE AND PROCESSING METHOD THEREFOR**

(30) Priority: 11.01.2017 CN 201710024561
(71) Applicant: Institute of Process Engineering, Chinese Academy of Sciences, Beijing 100190 (CN)
(72) Inventor: CAO, Hongbin, Beijing 100190 (CN); NING, Pengge, Beijing 100190 (CN)
(74) Representative: Cabinet Beaumont
(86) International application number: PCT/CN2017/090169
(87) International publication number: WO 2018/129868

(57) **Abstract**

A system for extracting vanadium from a leaching solution containing vanadium chromium silicon and for preparing vanadium pentoxide, and a method therefor, the system comprising, in sequence: an inpurity removal system, an extraction system, a reverse-extraction and vanadium precipitation system, a washing system and a calcining system. The method comprises the following steps: removing silicon in a leaching solution by using a silicon removal agent, extracting most of the vanadium to an organic phase by using centrifugal extraction, reverse-extracting the vanadium of a vanadium-rich organic phase by using a mixed solution containing a basic solution and an ammonium salt, and precipitating ammonium metavanadate to obtain an ammonium metavanadate solid, washing and drying, and then calcining at a certain temperature to obtain a low chromium, low silicon, low aluminum and high-purity vanadium pentoxide product.

## Description

### Technical field

The present invention belongs to the field of hydrometallurgy or wastewater treatment, and relates to a system for extracting vanadium from a vanadium-chromium-silicon-containing leaching solution and for preparing vanadium pentoxide, and a processing method therefor, in particular to a system for preparing vanadium pentoxide with a low content of chromium and aluminum from a vanadium-chromium-silicon-containing solution and a processing method therefor.

### Background

Vanadium, a nonferrous metal, is a very important strategic resource. Vanadium pentoxide (V₂O₅), as an important and the most widely used oxide of vanadium, has an application ranges from industries such as metallurgy and chemical industry to aerospace, electronics industry, and electrochemistry. With a continuously increasing demand of high-purity V₂O₅ in domestic and foreign markets, a requirement on the purity of V₂O₅ is increasingly high, and particularly, developments of vanadium redox flow batteries and vanadium-aluminum alloys impose higher requirements for the purity of vanadium and the content of impurity silicon in high-purity vanadium. However, since vanadium (V) and chromium (VI) have very similar chemical properties, vanadium and chromium are often coexistent in minerals, and are extremely difficult to be separated, so it is difficult to obtain a high-purity vanadium product.

For the preparation of high-purity V₂O₅, industrial V₂O₅ or other vanadates, which are low-priced and readily available, are generally adopted as raw materials and subjected to a series of purification steps and cleaning treatments. For instance, Piao Changlin, et al. has produced a high-purity vanadium with chromium and iron contents of <0.005% and a vanadium grade of >99.9% from crude V₂O₅ with a low content of chromium as a raw material by a molten salt electrolytic refining process. CN 102764894A prepares a high-purity vanadium powder from vanadium blocks as raw materials through hydrogenation, grinding and dehydrogenation. These preparation methods of high-purity vanadium all use processed industrial-grade product as a raw material which has limited sources and relatively high cost, such high requirements for the raw material have limited the popularization of these methods. On the contrast, a solution containing vanadium and chromium has a wide range of sources and a great impact on the environment, thus, how to make more effective use of such solution has become one of the current research topics.

To date, a variety of techniques have been developed for processing a vanadium-chromium-containing solution, wherein a relatively traditional technique is the chemical precipitation method comprising: removing impurities in the solution by adding various impurity removing agents, such as calcium chloride, magnesium chloride, aluminum sulfate, oxalic acid and sulfosalicylic acid, into the solution under a neutral or a weakly basic condition; then precipitating vanadium to generate ammonium metavanadate by adding ammonium salts such as ammonium sulfate and ammonium chloride; afterwards, washing and recrystallizing the ammonium metavanadate to obtain high-purity vanadium. This method is easy to operate, but has complicated steps, moreover, it is unable to obtain high-purity product and results in large loss of vanadium. There is another relatively novel method, namely an ion exchange method, which has advantages of simple production process, low reagent consumption, high vanadium recovery rate, etc., however, impurities in the solution are prone to adhere to the surface of resin during the ion exchange process, which causes the exchange capacity of the resin to decrease and even renders the resin "poisonous", in addition, this method needs harsh operation conditions and thus has not been popularized in industry.

Extraction method, as a relatively widely used method, possesses a plurality of advantages, such as good separation effect, high recovery rate, recyclable extractant, low production cost and extremely high purity of product, nevertheless, a third phase is formed in the extraction system due to great impact of impurities. Many extractants have been reported for extracting vanadium, including Cyanex 272, PC88A, TR-83, Adongen 464, Aliquat 336, N263 and quaternary ammonium salts. Among related technologies, for example, CN 101121962A achieves complete recovery of vanadium and chromium in a vanadium-chromium-containing solution by using operations such as extraction, strip-extraction and vanadium precipitation, nonetheless, the purity of the product of vanadate can only reach 99.5%. CN 103540745A prepares vanadium pentoxide with a purity of greater than 99.9% through a method comprising purification of a vanadium solution by extracting heteropoly acid therein with amine and precipitation of vanadium by adding an ammonium salt and calcination, however, this method requires the formation of heteropoly acids such as phosphorus-molybdenum-tungsten heteropoly acid and silicon-molybdenum-tungsten heteropoly acid in the raw material solution in order to remove impurities, thus it is not suitable for the solution which is difficult to form heteropoly acid.

CN 102849795A prepares high-purity V₂O₅ from crude ammonium metavanadate as a raw material via processes of alkali dissolution, impurity removal, multiple filtration, vanadium precipitation, calcination, etc., however, such method uses limited raw material and needs repeated and complicated operations, which are not conducive to popularization and application. CN 102923776A prepares V₂O₅ with a purity of 99.95% from crude ammonium metavanadate as a raw material via operations of alkali dissolution, pressurization and ammonia introduction, ultrasonic atomization, calcination, etc., however, this method has relatively high requirement for equipment and needs relatively large initial investment.

CN 100497675A discloses a novel process for completely recovering vanadium and chromium from a vanadium (V)-chromium (VI)-mixed solution, which mainly comprises the following steps: firstly, a primary-secondary composite amine extractant is contacted with a vanadium (V)-chromium (VI) aqueous solution in a countercurrent contact mode for extraction, thereby most of vanadium and a small amount of chromium in water are extracted into an organic phase, and most of chromium is left in an aqueous phase; then, the pH of the raffinate (aqueous phase) is adjusted with an acid, a certain amount of reducing agent is added for reduction reaction, the pH value of the aqueous solution is then adjusted back with sodium hydroxide, followed by filtration, the obtained solid phase is hydrated chromium oxide, and simultaneously, vanadium is strip-extracted from the vanadium-rich organic phase into water in a countercurrent contact mode by using an alkali liquor as a stripping agent; thereafter, vanadium is separated from the solution in the form of ammonium metavanadate by an ammonium salt precipitation method; and finally, the supernatant from vanadium precipitation is processed by using a high-efficiency rectification technology, strong aqueous ammonia is obtained at the tower top, de-ammonia water is obtained at the tower bottom and directly returned to the extraction process. This method can prepare vanadium pentoxide with a purity of higher than 99.5%, wherein impurities mainly comprise silicon, sodium, sulfur, and chromium.

CN 103937998A discloses a method for preparing vanadium pentoxide with a low content of silicon, which mainly comprises the following steps: firstly, desiliconization is conducted with a desiliconization agent at a certain temperature, then the desiliconized stock extract liquid is sent into an extraction system for extraction with an extractant, the obtained vanadium-rich organic phase is subjected to strip-extraction with a stripping agent to obtain ammonium metavanadate and a regenerated extractant, and the obtained ammonium metavanadate is subjected to further drying and calcinatin so that vanadium pentoxide is obtained. In this process, through deep thermodynamic calculation, a morphological equilibrium relationship of vanadium, aluminum (calcium) and silicon in the solution is obtained, and an optimal desiliconization operation interval is found. Moreover, through regulating and controlling this process via operation parameters, a vanadium pentoxide product having a silicon content of lower than 0.007% and a vanadium pentoxide purity of higher than 99.9% is obtained. However, this patent does not involve the residual quantity of impurities such as aluminum and calcium, which have been introduced into the system by desiliconization agent, in the vanadium pentoxide product and the content of chromium therein, these elements have great impact on the properties of high-purity vanadium pentoxide and application thereof.

Hence, there is an urgent need to find a suitable process system for preparing a high-purity V₂O₅ with a low content of silicon, aluminum and chromium at low cost.

### Summary

Directing at problems that the prior method for preparing a high-purity V₂O₅ from a vanadium-chromium-silicon-containing leaching solution is not suitable for a vanadium-chromium-containing solution that is difficult to form a heteropoly acid and has higher requirement for equipment and higher initial investment, and that additional impurities are introduced to affect the purity of V₂O₅, the present invention provides a system for preparing vanadium pentoxide with a low content of chromium and aluminum from a vanadium-chromium-silicon-containing solution and a processing method therefor. The system and the method according to the present invention, based on the prior art, involve: performing careful research on elements such as silicon, aluminum and chromium which are prone to deposit in the vanadium pentoxide product; performing quantitative detection on various polymerization states of impurities such as vanadium, chromium, silicon and aluminum in a stock extract liquid , liquid after removal of impurities and raffinate through chemical regulation and equipment strengthening; scientifically predicting the extraction mechanism of vanadiuman, chromium, silicon and aluminum based on the research result of the quantitative experimental test in combination with the structures of extracted species; and forming a set of system through measures such as chemically-regulated impurity removal, centrifugal extraction equipment strengthening and strip-extraction quantitative control, thereby realizing the preparation of a high-purity vanadium pentoxide product with a low content of chromium, silicon and aluminum.

To achieve this purpose, the present invention involves the following technical solutions:
In a first aspect, the present invention provides a system for extracting vanadium from a vanadium-chromium-silicon-containing leaching solution and preparing vanadium pentoxide, which comprises an impurity removal system, an extraction system, a strip-extraction and vanadium precipitation system, a washing system and a calcination system in sequence.

The following are preferred technical solutions of the present invention, but not as a limit of technical solutions provided by the present invention. The technical objects and beneficial effects of the present invention can be better achieved and realized by the following technical solutions.

As a preferred technical solution in the present invention, the impurity removal system comprises a first filter, an impurity removal reaction kettle, an impurity removal liquid standing tank and a second filter which are connected in sequence, with a liquid outlet of the second filter being configured to connect with a feed inlet of the extraction system, that is, the liquid outlet of the second filter is configured to connect with a feed inlet of a centrifugal extractor.

Preferably, the extraction system comprises a centrifugal extractor, a raffinate storage tank and a vanadium-rich organic phase storage tank, with a raffinate outlet of the centrifugal extractor being connected with an inlet of the raffinate storage tank, an organic phase outlet of the centrifugal extractor being connected with an inlet of the vanadium-rich organic phase storage tank, and a discharge outlet of the vanadium-rich organic phase storage tank being configured to connect with a feed inlet of the strip-extraction and vanadium precipitation system, that is, the discharge outlet of the vanadium-rich organic phase storage tank is configured to connect with an organic phase inlet of a vanadium-rich organic phase washing tank in the strip-extraction and vanadium precipitation system.

Preferably, the strip-extraction and vanadium precipitation system comprises a vanadium-rich organic phase washing tank, a strip-extraction and vanadium precipitation kettle and a strip-extracted aqueous phase-solid phase storage tank, with an organic phase outlet of the vanadium-rich organic phase washing tank being connected with an organic phase inlet of the strip-extraction and vanadium precipitation kettle, a liquid-solid mixed phase outlet of the strip-extraction and vanadium precipitation kettle being connected with an inlet of the strip-extracted aqueous phase-solid phase storage tank, and a solid outlet of the strip-extracted aqueous phase-solid phase storage tank being configured to connect with a feed inlet of the washing system, that is, the solid outlet of the strip-extracted aqueous phase-solid phase storage tank is configured to connect with a feed inlet of an ammonium metavanadate washing tank. A primary separation of the aqueous phase from the solid phase takes place in the strip-extracted aqueous phase-solid phase storage tank so that a solid phase and an aqueous phase are obtained, and the solid phase are subjected to washing in the washing system.

Preferably, the washing system comprises a washing liquid storage tank, an ammonium metavanadate washing tank and a centrifuge, with a liquid outlet of the washing liquid storage tank being connected with an aqueous phase inlet of the ammonium metavanadate washing tank, a discharge outlet of the ammonium metavanadate washing tank being connected with a feed inlet of the centrifuge, and a solid discharge outlet of the centrifuge being configured to connect with a feed inlet of the calcination system. An aqueous phase discharged from the centrifuge is sent into the extracted organic phase washing tank and washed before an extracted organic phase is obtained and returned to the extraction system for later use.

Preferably, the calcination system comprises a drying oven and a calcination furnace which are connected in sequence.

As a preferred technical solution in the present invention, the strip-extraction and vanadium precipitation system comprises a extracted organic phase washing tank, with an organic phase outlet of the strip-extraction and vanadium precipitation kettle being connected with an organic phase inlet of the extracted organic phase washing tank, a liquid outlet of the centrifuge being connected with an aqueous phase inlet of the extracted organic phase washing tank, and an aqueous phase outlet of the extracted organic phase washing tank being connected with an aqueous phase inlet of the vanadium-rich organic phase washing tank. An organic phase generated from the extracted organic phase washing tank is returned to the extraction system as an extractant for recycling.

In the present invention, the water used in the systems all comes from the washing liquid storage tank, so that the water used in the overall system achieves classified utilization, which saves water use of the system.

The liquid outlet of the washing liquid storage tank is connected with the aqueous phase inlet of the ammonium metavanadate washing tank, the discharge outlet of the ammonium metavanadate washing tank is connected with the feed inlet of the centrifuge, the liquid outlet of the centrifuge is connected with the aqueous phase inlet of the extracted organic phase washing tank, the aqueous phase outlet of the extracted organic phase washing tank is connected with the aqueous phase inlet of the vanadium-rich organic phase washing tank, the aqueous phase outlets of the raffinate storage tank and the vanadium-rich organic phase washing tank are both configured to connect with an aqueous phase inlet of a leaching system outside the present system, and the aqueous phase outlet of the strip-extracted aqueous phase-solid phase storage tank is configured to connect with an aqueous phase inlet of an ammonia recovery system, wherein the leaching system and the ammonia recovery system belong to technical schemes existing in the prior art and do not belong to the system claimed by the present invention, and therefore repetitious details will not be given any more.

Preferably, the centrifugal extractor is made of any one or a combination of at least two selected from the group consisting of stainless steel, organic glass, glass, and plastic. Typical but non-limiting examples of the combination are as follows: a combination of stainless steel and organic glass, a combination of glass and plastic, a combination of stainless steel, organic glass and glass, a combination of stainless steel, organic glass, glass and plastic.

Preferably, the calcination furnace is any one or a combination of at least two selected from the group consisting of a fixed bed, a rotary hearth furnace, and a fluidized bed. Typical but non-limiting examples of the combination are as follows: a combination of a fixed bed and a rotary hearth furnace, a combination of a rotary hearth furnace and a fluidized bed, and a combination of a fixed bed, a rotary hearth furnace and a fluidized bed.

In a second aspect, the present invention provides a method for extracting vanadium from a vanadium-chromium-silicon-containing leaching solution and preparing vanadium pentoxide, comprising: a vanadium-chromium-silicon-containing leaching solution is subjected to impurity removal treatment, extraction treatment, strip-extraction and vanadium precipitation treatment, washing, drying and calcination in sequence to obtain vanadium pentoxide.

The mechanism of the method according to the present invention is as follows:
silicon is first removed from a leaching solution with a desiliconization agent (an aluminum salt and/or a calcium salt), and then an importance of standing time on the removal of silicon and aluminum/calcium is obtained depending on morphology polymerization and precipitation results of the aluminum salt and/or calcium salt with vanadium and silicon elements, such standing process can remove aluminum, calcium and silicon elements to below 5 mg/L; thereafter, most of vanadium is selectively extracted into an organic phase by an extraction system, then the vanadium in a vanadium-rich organic phase is strip-extracted with a mixed solution of an alkali liquor and an ammonium salt, and ammonium metavanadate is precipitated; and the obtained ammonium metavanadate is washed and dried, followed by calcination at a certain temperature to obtain a high-purity V₂O₅ with a low content of silicon, chromium and aluminum.

As a preferred technical solution in the present invention, the impurity removal treatment comprises: a desiliconization agent is added into a filtered leaching solution containing vanadium, chromium and silicon for desiliconization treatment, followed by an adjustment of the pH of the solution, the solution is allowed to stand, and is filtered again so that a stock extract liquid after impurity removal is obtained.

Preferably, the desiliconization agent is an aluminum salt and/or a calcium salt.

Preferably, the aluminum salt is any one or a combination of at least two selected from the group consisting of Al₂(SO₄)₃, Al(OH)₃, AlCl₃, and NaAlO₂. Typical but non-limiting examples of the combination are as follows: a combination of Al₂(SO₄)₃ and Al(OH)₃, a combination of Al(OH)₃ and AlCl₃, a combination of AlCl₃ and NaAlO₂, a combination of Al₂(SO₄)₃, Al(OH)₃ and AlCl₃, and a combination of Al₂(SO₄)₃, Al(OH)₃, AlCl₃ and NaAlO₂, preferably any one or a combination of at least two selected from the group consisting of Al₂(SO₄)₃, Al(OH)₃, and AlCl₃. When any one or a combination of at least two selected from the group consisting of Al₂(SO₄)₃, Al(OH)₃, and AlCl₃ is used, silicon can be removed to below 2 mg/L.

Preferably, the calcium salt is any one or a combination of at least two selected from the group consisting of calcium chloride, calcium hydroxide, and calcium oxide. Typical but non-limiting examples of the combination are as follows: a combination of calcium chloride and calcium hydroxide, a combination of calcium hydroxide and calcium oxide, and a combination of calcium chloride, calcium hydroxide and calcium oxide.

Preferably, the desiliconization agent is in such an amount that the molar ratio of the aluminum salt and/or the calcium salt to silicon is from 0.4 : 1 to 2.0 : 1, e.g. 0.4:1, 0.6:1, 0.8:1, 1:1, 1.1:1, 1.3:1, 1.5:1, 1.7:1, 1.9:1, or 2.0:1, but not limited to the numerical values recited herein, and other numerical values within this numerical range which are not recited herein are equally applicable.

Preferably, the reaction temperature for the desiliconization treatment is 30°C-90°C, e.g. 30°C, 32°C, 40°C, 45°C, 50°C, 52°C, 60°C, 71°C, 80°C, 88°C or 90°C, but not limited to the numerical values recited herein, and other numerical values within this numerical range which are not recited herein are equally applicable.

Preferably, the reaction time for the desiliconization treatment is 30 min-120 min, e.g. 30 min, 50 min, 70 min, 90 min, 100 min, 110 min or 120 min, but not limited to the numerical values recited herein, and other numerical values within this numerical range which are not recited herein are equally applicable.

Preferably, after the desiliconization treatment, the pH of the solution is adjusted to 7-9, e.g. 7, 7.5, 8, 8.5 or 9, but not limited to the numerical values recited herein, and other numerical values within this numerical range which are not recited herein are equally applicable.

Preferably, the standing time is 0-72 h and excludes 0, e.g. 1 h, 5 h, 10 h, 20 h, 30 h, 40 h, 50 h, 60 h or 72 h, but not limited to the numerical values recited herein, and other numerical values within this numerical range which are not recited herein are equally applicable.

Preferably, the obtained stock extract liquid after impurity removal has a silicon content of <5 mg/L and an aluminum content of <5 mg/L.

According to the morphological binding mode and way of aluminum, silicon and aluminum, through a chemical regulation mode, the desiliconized impurity removal solution is allowed to stand for a certain time at normal temperature, so that the silicon can be deeply removed to below 5 mg/L, meanwhile the aluminum introduced is also deeply removed to be below 5 mg/L, thereby providing a technical support for the smooth operation of a subsequent extraction process and the preparation of high-purity vanadium with a low content of silicon at low cost.

As a preferred technical solution in the present invention, the extraction treatment comprises:
(1) the pH of the stock extract liquid after impurity removal treatment is adjusted, and then a vanadium-rich organic phase and a raffinate are obtained through centrifugal extraction, wherein, chromium in the stock extract liquid remains in the raffinate;
(2) after the pH of the raffinate obtained in the step (1) is adjusted, a reducing agent is added for reduction and the pH is adjusted, filtration is conducted so that a solid hydrated chromium oxide is obtained.

The process for preparing the hydrated chromium oxide in the step (2) is well known in the prior art, and therefore repetitious details will not be given any more.

Preferably, in the step (1), the pH of the stock extract liquid after impurity removal treatment is adjusted to be acidic, preferably 3-7, e.g. 3, 3.5, 4, 4.5, 5, 5.8, 6 or 7, but not limited to the numerical values recited herein, and other numerical values within this numerical range which are not recited herein are equally applicable.

Preferably, the centrifugal extraction in the step (1) is multistage centrifugal extraction having a stage number of ≥1, e.g. 1, 2, 3, 4, 5, 6, 7, or 8, but not limited to the numerical values recited herein, and other numerical values within this numerical range which are not recited herein are equally applicable.

Preferably, during the multistage centrifugal extraction, the pH is adjusted before each extraction.

Preferably, an extraction organic phase used in the centrifugal extraction in the step (1) comprises an extractant.

Preferably, the extraction organic phase used in the centrifugal extraction in the step (1) comprises an extractant in a content of 3 wt%-30 wt%, e.g. 3 wt%, 5 wt%, 10 wt%, 15 wt%, 20 wt%, 25 wt% or 30 wt%, but not limited to the numerical values recited herein, and other numerical values within this numerical range which are not recited herein are equally applicable.

Preferably, the extraction organic phase used in the centrifugal extraction in the step (1) further comprises a phase regulator and/or a diluent.

Preferably, the extraction organic phase used in the centrifugal extraction in the step (1) comprises a phase regulator in a concentration of 2 wt%-10 wt%, e.g. 2 wt%, 4wt%, 6 wt%, 8 wt%, 9 wt% or 10 wt%, but not limited to the numerical values recited herein, and other numerical values within this numerical range which are not recited herein are equally applicable.

Preferably, the extraction organic phase used in the centrifugal extraction in the step (1) comprises a diluent in a concentration of 60 wt%-95 wt%, e.g. 60 wt%, 65 wt%, 70 wt%, 75 wt%, 80 wt%, 85 wt%, 90 wt% or 95 wt%, but not limited to the numerical values recited herein, and other numerical values within this numerical range which are not recited herein are equally applicable.

Preferably, the extractant is a neutral extractant and/or an alkaline extractant.

Preferably, the extractant is any one or a combination of at least two selected from the group consisting of a phosphorus-oxygen-containing extractant, an ester extractant, an amine extractant, and an oxime extractant. Typical but non-limiting examples of the combination are as follows: a combination of a phosphorus-oxygen-containing extractant and an ester extractant, a combination of an amine extractant and an oxime extractant, a combination of a phosphorus-oxygen-containing extractant, an ester extractant and an amine-type extractant, and a combination of a phosphorus-oxygen-containing extractant, an ester extractant, an amine extractant and an oxime extractant.

Preferably, the extractant is any one or a combination of at least two selected from the group consisting of TBP, LK-N21, JMT, N1923, N116, 7101, LIX 63, and LIX 984. Typical but non-limiting examples of the combination are as follows: a combination of TBP and LK-N21, a combination of JMT and N1923, a combination of N116 and 7101, a combination of 7101 and LIX 63, a combination of N116, 7101, LIX 63 and LIX 984, a combination of TBP, LK-N21, JMT and N1923, and a combination of N1923, N116, 7101 and LIX 63.

Preferably, the phase regulator is an ester phase regulator and/or an alcohol phase regulator.

Preferably, the phase regulator is any one or a combination of at least two selected from the group consisting of hexyl acetate, amyl acetate, ethyl p-methylbenzoate, tert-butyl acetate, diisopropyl succinate, tributyl phosphate, isooctyl alcohol, n-amyl alcohol, n-octyl alcohol, and heptyl alcohol. Typical but non-limiting examples of the combination are as follows: a combination of hexyl acetate and amyl acetate, a combination of ethyl p-methylbenzoate, t-butyl acetate and diisopropyl succinate, a combination of diisopropyl succinate and tributyl phosphate, a combination of tributyl phosphate, isooctyl alcohol and n-amyl alcohol, a combination of isooctyl alcohol, n-amyl alcohol, n-octanol and heptyl alcohol, a combination of hexyl acetate, amyl acetate, ethyl p-methylbenzoate, t-butyl acetate and diisopropyl succinate, and a combination of hexyl acetate, amyl acetate, ethyl p-methylbenzoate, t-butyl acetate, diisopropyl succinate, tributyl phosphate, isooctyl alcohol and n-amyl alcohol.

Preferably, the diluent is a non-polar solvent, preferably any one or a combination of at least two selected from the group consisting of kerosene, toluene, and n-hexane. Typical but non-limiting examples of the combination are as follows: a combination of kerosene and toluene, a combination of toluene and n-hexane, and a combination of kerosene, toluene and n-hexane.

Preferably, the diluent is any one or a combination of at least two selected from the group consisting of sulfonated kerosene, cyclopentane, n-pentane, cyclohexane, n-hexane, benzene, toluene, xylene, chloroform, and carbon tetrachloride. Typical but non-limiting examples of the combination are as follows: a combination of sulfonated kerosene and cyclopentane, a combination of n-pentane and cyclohexane, a combination of n-hexane, benzene, toluene and xylene, a combination of xylene, chloroform and carbon tetrachloride, a combination of sulfonated kerosene, cyclopentane, n-pentane, cyclohexane and n-hexane, and a combination of n-hexane, benzene, toluene, xylene, chloroform and carbon tetrachloride.

Preferably, the volume ratio of the organic phase to the aqueous phase in the centrifugal extraction in the step (1) is (10-1) : (1-10), e.g. 10:1, 9:2, 7:3, 6:4, 4:1, 3:2, 2:2 or 1:10, but not limited to the numerical values recited herein, and other numerical values within this numerical range which are not recited herein are equally applicable, preferably (4-1) : (1-4).

Preferably, the temperature for the centrifugal extraction in the step (1) is 0-40°C, e.g. 1°C, 5°C, 10°C, 15°C, 20°C, 25°C, 30°C, 35°C or 40°C, but not limited to the numerical values recited herein, and other numerical values within this numerical range which are not recited herein are equally applicable, preferably 10°C-40°C.

Preferably, the equilibrium pH for the centrifugal extraction in the step (1) is 3-9, e.g. 3, 3.5, 4, 4.5, 5, 5.5, 6, 6.5, 7, 7.5, 8, 8.5 or 9, but not limited to the numerical values recited herein, and other numerical values within this numerical range which are not recited herein are equally applicable, preferably 6.5-9.

Preferably, the time for the centrifugal extraction in the step (1) is 3 min-60 min, e.g. 3 min, 5 min, 10 min, 15 min, 20 min, 25 min, 30 min, 40 min, 50 min or 60min, but not limited to the numerical values recited herein, and other numerical values within this numerical range which are not recited herein are equally applicable.

As a preferred technical solution in the present invention, the strip-extraction and vanadium precipitation treatment comprises the following steps:
(a) the vanadium-rich organic phase obtained by the extraction treatment is subjected to strip-extraction and vanadium precipitation treatment by using a stripping agent, and an extracted organic phase and a solid-liquid mixture are obtained, wherein, the strip-extraction and vanadium precipitation processes are carried out simultaneously;
(b) the solid-liquid mixture obtained in the step (a) is subjected to centrifugal separation so that ammonium metavanadate is obtained;
preferably, the stripping agent in the step (a) comprises an alkaline solution.

Preferably, the alkaline solution is any one or a combination of at least two selected from the group consisting of a sodium hydroxide solution, a potassium hydroxide solution, a calcium hydroxide solution, and aqueous ammonia. Typical but non-limiting examples of the combination are as follows: a combination of a sodium hydroxide solution and a potassium hydroxide solution, a combination of a calcium hydroxide solution and ammonia water, a combination of a potassium hydroxide solution, a calcium hydroxide solution and ammonia water, and a combination of a sodium hydroxide solution, a potassium hydroxide solution and a calcium hydroxide solution.

Preferably, the molar ratio of hydroxy radicals in the alkaline solution to vanadium in the vanadium-rich organic phase is (0-5) : 1 and excludes 0, e.g. 0.1:1, 0.5:1, 1:1, 1.5:1, 2:1, 2.5:1, 3:1, 3.5:1, 4:1, 4.5:1 or 5:1, but not limited to the numerical values recited herein, and other numerical values within this numerical range which are not recited herein are equally applicable, preferably (1-2):1.

Preferably, the stripping agent in the step (a) further comprises an ammonium salt.

Preferably, the ammonium salt is any one or a combination of at least two selected from the group consisting of ammonium carbonate, ammonium sulfate, and ammonium chloride. Typical but non-limiting examples of the combination are as follows: a combination of ammonium carbonate and ammonium sulfate, a combination of ammonium sulfate and ammonium chloride, and a combination of ammonium carbonate, ammonium sulfate and ammonium chloride.

Preferably, the ammonium salt is added in such an amount that the molar ratio of ammonium ions to vanadium in the vanadium-rich organic phase is from 0 : 1 to 1 : 1, e.g. 0.1:1, 0.3:1, 0.5:1, 0.7:1, 0.9:1 or 1:1, but not limited to the numerical values recited herein, and other numerical values within this numerical range which are not recited herein are equally applicable, preferably (0-0.8):1.

Preferably, when the alkaline solution in the stripping agent is aqueous ammonia, the ammonium salt is added in such an amount that the molar ratio of the aqueous ammonia to the ammonium ions is from 0.2 :1 to 5 : 1, e.g. 0.2:1, 0.5:1, 1:1, 2:1, 3:1, 4:1 or 5:1, but not limited to the numerical values recited herein, and other numerical values within this numerical range which are not recited herein are equally applicable, preferably from 0.5 : 1 to 3 : 1.

Preferably, the volume ratio of the vanadium-rich organic phase to the stripping agent in the step (a) is (1-10):1, e.g. 1:1, 2:1, 3:1, 5:1, 7:1, 8:1 or 10:1, but not limited to the numerical values recited herein, and other numerical values within this numerical range which are not recited herein are equally applicable.

Preferably, the temperature for the strip-extraction and vanadium precipitation treatment in the step (a) is 20°C-70°C, e.g. 20°C, 30°C, 35°C, 40°C, 45°C, 50°C, 55°C, 60°C, 62°C or 70°C, but not limited to the numerical values recited herein, and other numerical values within this numerical range which are not recited herein are equally applicable.

Preferably, the time for the strip-extraction and vanadium precipitation treatment in the step (a) is 0.5 h-5 h, e.g. 0.5 h, 1 h, 1.5 h, 2 h, 2.5 h, 3 h, 3.5 h, 4 h, 4.5 h or 5 h, but not limited to the numerical values recited herein, and other numerical values within this numerical range which are not recited herein are equally applicable.

The present invention uses a mixed solution of an alkaline solution and an ammonium salt in the vanadium-rich organic phase for strip-extraction, allowing the strip-extraction and vanadium precipitation to take place simultaneously. Compared with CN 100497675A in which strip-extraction and precipitation are separately carried out, the present invention achieves the following beneficial effects: the treatment process is greatly simplified; the content of silicon is lower in the prepared ammonium metavanadate and the subsequent vanadium pentoxide (the silicon content is less than 0.005 wt%, and silicon in the vanadium pentoxide prepared under a better condition is not detected), thus the obtained vanadium pentoxide has finer particles, large specific surface area and uniform particles; moreover, the most common phenomenon of interface emulsification during the strip-extraction does not occur due to the addition of a proper amount of ammonium salt; a clear oil-water interface which results in easy separation can be obtained; furthermore, a much better technical effect can be achieved by combining the processes of removing silicon and selectively extracting vanadium, such as a purity of the product V₂O₅ can reach **≥** 99.9%.

As a preferred technical solution in the present invention, the washing is a multiple washing with washing times ≥1, e.g. 1, 2, 3, 4, 5 or 6, but not limited to the numerical values recited herein, and other numerical values within this numerical range which are not recited herein are equally applicable.

Preferably, the washing is centrifugal washing.

Preferably, a washing liquid used in the washing is an inorganic washing liquid and/or an organic washing liquid.

Preferably, the inorganic washing liquid is an aqueous solution of any one or a combination of at least two selected from the group consisting of (NH₄)₂SO₄, NH₄Cl, (NH₄)₂CO₃, and NH₄NO₃. Typical but non-limiting examples of the combination are as follows: a combination of (NH₄)₂SO₄ and NH₄Cl, a combination of (NH₄)₂CO₃ and NH₄NO₃, a combination of (NH₄)₂SO₄, NH₄Cl and (NH₄)₂CO₃, and a combination of (NH₄)₂SO₄, NH₄Cl, (NH₄)₂CO₃ and NH₄NO₃.

Preferably, the organic washing liquid is any one or a combination of at least two selected from the group consisting of methyl alcohol, toluene, ethylalcohol, ethylbenzene, acetone, and ethyl ether. Typical but non-limiting examples of the combination are as follows: a combination of methyl alcohol and toluene, a combination of ethylalcohol and ethylbenzene, a combination of acetone and ethyl ether, a combination of methyl alcohol, toluene and ethylalcohol, a combination of ethylalcohol, ethylbenzene, acetone and ethyl ether, and a combination of methyl alcohol, toluene, ethylalcohol, ethylbenzene, acetone and ethyl ether.

Preferably, the washing liquid has a concentration of 0-0.4 mol/L, e.g. 0.1 mol/L, 0.25 mol/L, 0.3 mol/L, 0.36 mol/L or 0.4 mol/L, but not limited to the numerical values recited herein, and other numerical values within this numerical range which are not recited herein are equally applicable. When the concentration of the washing liquid is 0, the washing can be performed with pure water.

As a preferred technical solution in the present invention, the drying temperature is 60°C-150°C, e.g. 60°C, 75°C, 86°C, 95°C, 105°C, 120°C, 145°C or 150°C, but not limited to the numerical values recited herein, and other numerical values within this numerical range which are not recited herein are equally applicable.

Preferably, the drying is air drying and/or oven drying.

Preferably, the drying time is 0-120 min, e.g. 10 min, 20 min, 40 min, 60 min, 80 min, 100 min or 120 min, but not limited to the numerical values recited herein, and other numerical values within this numerical range which are not recited herein are equally applicable.

Preferably, the calcination temperature is 200°C-600°C, e.g. 200°C, 240°C, 280°C, 300°C, 350°C, 400°C, 450°C, 500°C, 520°C, 550°C or 600°C, but not limited to the numerical values recited herein, and other numerical values within this numerical range which are not recited herein are equally applicable.

Preferably, the calcination time is 1 h-4 h, e.g. 1 h, 1.3 h, 2 h, 2.2 h, 3.0 h, 3.5 h, 3.8 h or 4 h, but not limited to the numerical values recited herein, and other numerical values within this numerical range which are not recited herein are equally applicable.

Preferably, a gas is introduced during the calcination.

Preferably, the gas is any one or a combination of at least two selected from the group consisting of air, oxygen, and nitrogen. Typical but non-limiting examples of the combination are as follows: a combination of air and oxygen, a combination of oxygen and nitrogen, and a combination of air, oxygen and nitrogen.

Preferably, the obtained vanadium pentoxide has a purity of ≥99.9 wt%, wherein the silicon content is <0.005 wt%, the aluminum content is <0.001 wt%, and the chromium content is <0.001 wt%.

As a preferred technical solution in the present invention, the vanadium-chromium-silicon-containing leaching solution is any one or a combination of at least two selected from the group consisting of a vanadium-chromium-containing slag leaching solution, a vanadium-containing waste leaching solution, and a vanadium-containing plant wastewater; the non-industrial-grade vanadate product, even containing silicon, can result in a high-purity V₂O₅ with a low content of silicon.

Preferably, the vanadium-chromium-silicon-containing leaching solution has a content of vanadium element of >2 g/L, a content of chromium element of <10 g/L and a content of silicon element of <10 g/L. However, the vanadium-chromium-silicon-containing leaching solution not only comprises vanadium element, chromium element and silicon element, but also comprises other elements such as sodium, aluminum, sulfur, tungsten, molybdenum, gallium, manganese, magnesium, phosphorus, copper, gold, silver, potassium, calcium, and boron.

More specifically, the method for extracting vanadium from a vanadium-chromium-silicon-containing leaching solution and preparing vanadium pentoxide comprises the following steps:
(A) Impurity removal treatment:
   a vanadium-chromium-silicon-containing leaching solution is filtered in a first filter, and fed into an impurity removal reaction kettle, then a desiliconization agent is added into the impurity removal reaction kettle, the vanadium-chromium-silicon-containing leaching solution is subjected to desiliconization treatment before the liquid after desiliconization treatment is fed into an impurity removal liquid standing tank for standing, and the material after standing is filtered by a second filter so that a stock extract liquid after impurity removal is obtained;
(B) Extraction treatment:
   the stock extract liquid after impurity removal is fed into a centrifugal extractor to be contacted with an extraction organic phase for extraction so that a chromium-containing raffinate and a vanadium-rich organic phase are obtained, the chromium-containing raffinate is fed into a raffinate storage tank, the liquid in the raffinate storage tank is fed into a leaching system outside the system, and the vanadium-rich organic phase is fed into a vanadium-rich organic phase storage tank for later use;
(C) Strip-extraction and vanadium precipitation treatment:
   the vanadium-rich organic phase in the vanadium-rich organic phase storage tank is fed into a vanadium-rich organic phase washing tank to be contacted with the aqueous phase in the vanadium-rich organic phase washing tank for washing and separation, the washed vanadium-rich organic phase is sent into a strip-extraction and vanadium precipitation kettle to be contacted and mixed with a stripping agent, and then strip-extraction and vanadium precipitation treatment is conducted so that an extracted organic phase and a solid-liquid mixture are obtained;
   the extracted organic phase is sent into an extracted organic phase washing tank for washing and recycling;
   the solid-liquid mixture is sent into a strip-extracted aqueous phase-solid phase storage tank, and subjected to separation so that a solid phase and an aqueous phase are obtained.
(D) washing, drying and calcination
   the solid phase obtained in the strip-extracted aqueous phase-solid phase storage tank is sent into an ammonium metavanadate washing tank for washing, wherein the washing liquid comes from a washing liquid storage tank, the washed material is fed into a centrifuge for centrifugal separation, the solid material obtained therefrom is sent into a drying oven for drying and then fed into a calcination furnace for calcination, finally vanadium pentoxide is obtained;
   the liquid obtained from centrifugal separation is fed into an extracted organic phase washing tank.

As compared to the prior art, the present invention achieves the following beneficial effects:
(1) according to the present invention, using an aluminum salt and/or a calcium salt as a desiliconization agent is capable of removal of most of silicon impurities in the solution, so that the silicon content in the solution is lower than 10 mg/L; in addition, pH adjusting treatment and standing for a certain time are capable of ensuring aluminum and silicon impurities in the solution to be reduced to below 5 mg/L; the silicon and aluminum contents of the present solution are reduced by 50% compared with those of the stock extract liquid of CN 103937998A, which provides a strong technical support for the extraction process and purification and separation thereof;
(2) according to the present invention, introducing the centrifugal extractor into a system for vanadium-chromium separation and high-purity vanadium extraction and preparation is capable to effectively avoid the heat sensitivity and degradation of the common extractant for extracting vanadium, and meanwhile to greatly increase the reaction speed and reduce the loss of the extractant in water, which plays a significant role in maintaining vanadium in an advantageous morphology throughout the extraction;
(3) the present method regulates the ratio of the alkaline solution to the ammonium salt during strip-extraction, so that impurities such as chromium do not enter an ammonium metavanadate crystal lattice during strip-extraction, which provides a further assurance for deep separation of vanadium from chromium;
(4) in the process according to the present invention, water is subjected to classified utilization, wherein ammonium metavanadate washing water is used for washing the organic extracted phase after strip-extraction, and then can be used for washing the vanadium-rich organic phase, further for use grade by grade, and the used wastewater is discharged to a leaching system for circulation;
(5) according to the present invention, through strengthening the processes of removing silicon and aluminum, selective extraction and strip-extraction, vanadium and chromium are deeply separated, so that a high-purity V₂O₅ with a low content of silicon, aluminum and chromium (the silicon content is <0.005 wt%, the aluminum content is <0.001 wt%, the chromium content is <0.001 wt%, and the V₂O₅ content is ≥99.9%) can be obtained, the quality and value of the product are greatly improved, and the resulting high-purity V₂O₅ can be widely applied to the fields such as catalysts, batteries, aerospace, and electronic elements.

### Brief Description of the Drawings

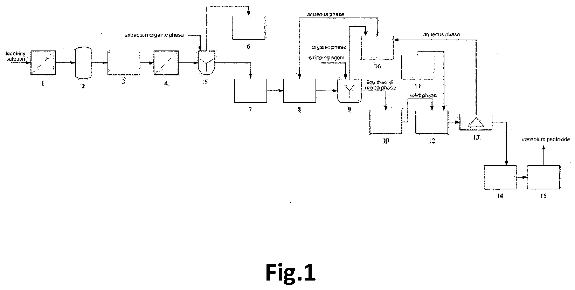

Fig. 1 is a schematic structural diagram of a system for extracting vanadium from a vanadium-chromium-silicon-containing leaching solution and preparing vanadium pentoxide according to the present invention;
wherein, 1 represents the first filter, 2 represents impurity removal reaction kettle, 3 represents impurity removal liquid standing tank, 4 represents the second filter, 5 represents centrifugal extractor, 6 represents raffinate storage tank, 7 represents vanadium-rich organic phase storage tank, 8 represents vanadium-rich organic phase washing tank, 9 represents strip-extraction and vanadium precipitation kettle, 10 represents strip-extracted aqueous phase-solid phase storage tank, 11 represents washing liquid storage tank, 12 represents ammonium metavanadate washing tank, 13 represents centrifuge, 14 represents drying oven, 15 represents calcination furnace, 16 represents extracted organic phase washing tank.

### Detailed Description

In order to better illustrate the present invention and to facilitate understanding of the technical solutions of the present invention, the present invention will be further described in detail below.

However, the following examples are merely illustrative of the present invention and are not intended to limit the scope of the present invention, and the scope of the present invention is defined by the claims.

As shown in Fig. 1, the embodiment part of the present invention provides a system for extracting vanadium from a leaching solution containing vanadium, chromium and silicon and preparing vanadium pentoxide, the system comprises an impurity removal system, an extraction system, a strip-extraction and vanadium precipitation system, a washing system and a calcination system in sequence.

The impurity removal system comprises a first filter 1, an impurity removal reaction kettle 2, an impurity removal liquid standing tank 3 and a second filter 4 which are connected in sequence, with a liquid outlet of the second filter 4 being configured to connect with a feed inlet of the extraction system.

The extraction system comprises a centrifugal extractor 5, a raffinate storage tank 6 and a vanadium-rich organic phase storage tank 7, with a raffinate outlet of the centrifugal extractor 5 being connected with an inlet of the raffinate storage tank 6, an organic phase outlet of the centrifugal extractor 5 being connected with an inlet of the vanadium-rich organic phase storage tank 7, and a discharge outlet of the vanadium-rich organic phase storage tank 7 being configured to connect with a feed inlet of the strip-extraction and vanadium precipitation system.

The strip-extraction and vanadium precipitation system comprises a vanadium-rich organic phase washing tank 8, a strip-extraction and vanadium precipitation kettle 9 and a strip-extracted aqueous phase-solid phase storage tank 10, with an organic phase outlet of the vanadium-rich organic phase washing tank 8 being connected with an organic phase inlet of the strip-extraction and vanadium precipitation kettle 9, a liquid-solid mixed phase outlet of the strip-extraction and vanadium precipitation kettle 9 being connected with an inlet of the strip-extracted aqueous phase-solid phase storage tank 10, and a solid outlet of the strip-extracted aqueous phase-solid phase storage tank 10 being configured to connect with a feed inlet of the washing system.

The washing system comprises a washing liquid storage tank 11, an ammonium metavanadate washing tank 12 and a centrifuge 13, with a liquid outlet of the washing liquid storage tank 11 being connected with an aqueous phase inlet of the ammonium metavanadate washing tank 12, a discharge outlet of the ammonium metavanadate washing tank 12 being connected with a feed inlet of the centrifuge 13, and a solid discharge outlet of the centrifuge 13 being configured to connect with a feed inlet of the calcination system.

The calcination system comprises a drying oven 14 and a calcination furnace 15 which are connected in sequence.

The embodiment part of the present invention further provides a method for extracting vanadium from a vanadium-chromium-silicon-containing leaching solution and preparing vanadium pentoxide, comprising: a vanadium-chromium-silicon-containing leaching solution is subjected to impurity removal treatment, extraction treatment, strip-extraction and vanadium precipitation treatment, washing, drying and calcination in sequence so that vanadium pentoxide is obtained.

The impurity removal treatment comprises: a desiliconization agent is added into a filtered leaching solution containing vanadium, chromium and silicon for desiliconization treatment, following the desiliconization treatment, the pH of the solution is adjusted, the solution is allowed to stand, and is filtered again so that a stock extract liquid after impurity removal is obtained.

The extraction treatment comprises:
(1) the pH of the stock extract liquid after impurity removal treatment is adjusted, and then a vanadium-rich organic phase and a raffinate are obtained through centrifugal extraction;
(2) after the pH of the raffinate obtained in the step (1) is adjusted, a reducing agent is added for reduction and the pH is adjusted, filtration is conducted so that a solid hydrated chromium oxide is obtained.

The strip-extraction and vanadium precipitation treatment comprises the following steps:
(a) the vanadium-rich organic phase obtained by the extraction treatment is subjected to strip-extraction and vanadium precipitation treatment by using a stripping agent, and an extracted organic phase and a solid-liquid mixture are obtained;
(b) the solid-liquid mixture obtained in the step (a) is subjected to centrifugal separation so that ammonium metavanadate is obtained.

The following are typical but non-limitative examples of the present invention:

### Example 1:

This example provides a system for extracting vanadium from a vanadium-chromium-silicon-containing leaching solution and preparing vanadium pentoxide and a processing method therefor:
The system comprises an impurity removal system, an extraction system, a strip-extraction and vanadium precipitation system, a washing system and a calcination system in sequence.

The impurity removal system comprises a first filter 1, an impurity removal reaction kettle 2, an impurity removal liquid standing tank 3 and a second filter 4 which are connected in sequence, with a liquid outlet of the second filter 4 being configured to connect with a feed inlet of the extraction system.

The extraction system comprises a centrifugal extractor 5, a raffinate storage tank 6 and a vanadium-rich organic phase storage tank 7, with a raffinate outlet of the centrifugal extractor 5 being connected with an inlet of the raffinate storage tank 6, an organic phase outlet of the centrifugal extractor 5 being connected with an inlet of the vanadium-rich organic phase storage tank 7, and a discharge outlet of the vanadium-rich organic phase storage tank 7 being configured to connect with a feed inlet of the strip-extraction and vanadium precipitation system.

The strip-extraction and vanadium precipitation system comprises a vanadium-rich organic phase washing tank 8, a strip-extraction and vanadium precipitation kettle 9 and a strip-extracted aqueous phase-solid phase storage tank 10, with an organic phase outlet of the vanadium-rich organic phase washing tank 8 being connected with an organic phase inlet of the strip-extraction and vanadium precipitation kettle 9, a liquid-solid mixed phase outlet of the strip-extraction and vanadium precipitation kettle 9 being connected with an inlet of the strip-extracted aqueous phase-solid phase storage tank 10, and a solid outlet of the strip-extracted aqueous phase-solid phase storage tank 10 being configured to connect with a feed inlet of the washing system.

The washing system comprises a washing liquid storage tank 11, an ammonium metavanadate washing tank 12 and a centrifuge 13, with a liquid outlet of the washing liquid storage tank 11 being connected with an aqueous phase inlet of the ammonium metavanadate washing tank 12, a discharge outlet of the ammonium metavanadate washing tank 12 being connected with a feed inlet of the centrifuge 13, and a solid discharge outlet of the centrifuge 13 being configured to connect with a feed inlet of the calcination system.

The calcination system comprises a drying oven 14 and a calcination furnace 15 which are connected in sequence.

The strip-extraction and vanadium precipitation system comprises an extracted organic phase washing tank 16, with an organic phase outlet of the strip-extraction and vanadium precipitation kettle 9 being connected with an organic phase inlet of the extracted organic phase washing tank 16, a liquid outlet of the centrifuge 13 being connected with an aqueous phase inlet of the extracted organic phase washing tank 16, and an aqueous phase outlet of the extracted organic phase washing tank 16 being connected with an aqueous phase inlet of the vanadium-rich organic phase washing tank 8.

The processing method of the aforesaid system comprises:
(1) a vanadium-chromium-silicon-containing leaching solution was filtered by the first filter 1, 250 mL of the leaching solution containing pentavalent vanadium, hexavalent chromium and silicon was sent into the impurity removal reaction kettle 2, heated to 90°C at constant temperature, 5.86 g of AlCl₃ and 1.547 g of CaO were added thereto for desilicification treatment, the reaction was carried out for 30 min under stirring, the resulting solution was cooled to room temperature, the pH value thereof was adjusted to 8.8 with sulfuric acid, followed by stirring for 5 min, then the solution was sent into an impurity removal liquid standing tank 3 for standing for 60 min, and subjected to centrifugal separation and filtration by the second filter 4, thererby a stock extract liquid after impurity removal was obtained;
(2) the stock extract liquid after impurity removal was adjusted to a pH value of 4.2 with sulfuric acid, sent into the centrifugal extractor 5 for mixing with a primary amine extractant (containing 10 wt% of JMT, 5 wt% of hexyl acetate and 85 wt% of kerosene) in a ratio of 1:1, the mixture was subjected to centrifugal extraction at 25°C for 20 minutes so that a chromium-containing raffinate and a vanadium-rich organic phase were obtained; sulfuric acid was added into the chromium-containing raffinate to adjust the pH value to 3, then, to the chromium-containing raffinate, anhydrous sodium sulfite was added in an amount twice of the theoretical amount, after reacting for 30 min, the pH value was adjusted to 7 with NaOH, hydrated chromium oxide was obtained by filtration; the vanadium-rich organic phase was fed into the vanadium-rich organic phase storage tank 7 for later use;
(3) the vanadium-rich organic phase in the vanadium-rich organic phase storage tank 7 was fed into the vanadium-rich organic phase washing tank 8 to be contacted with the aqueous phase in the vanadium-rich organic phase washing tank for washing and separation, the washed vanadium-rich organic phase was sent into the strip-extraction and vanadium precipitation kettle 9 for strip-extraction and vanadium precipitation with 100 mL of strip-extraction liquid (containing 2 wt% of aqueous ammonia, 0.1 mol/L of NH₄Cl and 0.1 mol/L of NH₄NO₃) under stirring at 50°C for 30 min, and the mixture was allowed to stand until oil and water were completely separated, thereby an extracted organic phase and a solid-liquid mixture were obtained;
   the extracted organic phase was sent into the extracted organic phase washing tank 16 to be washed and recycled;
   the solid-liquid mixture was sent into the strip-extracted aqueous phase-solid phase storage tank 10, and subjected to separation so that a solid phase and an aqueous phase were obtained;
(4) the solid phase obtained in the strip-extracted aqueous phase-solid phase storage tank 10 was sent into the ammonium metavanadate washing tank 12 for washing, wherein the washing liquid came from the washing liquid storage tank 11, the washed material was fed into the centrifuge 13 for centrifugal separation so that an ammonium metavanadate solid was obtained, and the obtained ammonium metavanadate solid was oven dried in the drying oven 14 at 50°C, followed by calcination in the calcination furnace 15 at 300°C for 1.5 h, thereby a brick red product vanadium pentoxide (V₂O₅) was obtained.

The vanadium pentoxide (V₂O₅) was determined and analyzed to have a purity of ≥99.9%, a silicon content of 0.004 wt%, an aluminum content of 0.001 wt% and a chromium content of 0.001 wt%.

### Example 2:

This example provides a system for extracting vanadium from a vanadium-chromium-silicon-containing leaching solution and preparing vanadium pentoxide and a processing method therefor:
The system is the same as that in Example 1.

The processing method of the aforesaid system comprises:
(1) a vanadium-chromium-silicon-containing leaching solution was filtered by the first filter 1, 500 mL of the leaching solution containing pentavalent vanadium, hexavalent chromium and silicon was sent into the impurity removal reaction kettle 2, heated to 60°C at constant temperature, 5.86 g of Al₂(SO₄)₃ and 0.751 g of CaCl₂ were added thereto for desilicification treatment, the reaction was carried out for 40min under stirring, the resulting solution was cooled to room temperature, the pH value thereof was adjusted to 7.7 with sulfuric acid, followed by stirring for 10 min, then the solution was sent into an impurity removal liquid standing tank 3 for standing for 2 h, and subjected to centrifugal separation and filtration by the second filter 4, thererby a stock extract liquid after impurity removal was obtained;
(2) the stock extract liquid after impurity removal was adjusted to a pH value of 3.6 with sulfuric acid, sent into the centrifugal extractor 5 for mixing with an extractant (containing 15 wt% of TBP, 5 wt% of ethyl p-methylbenzoate and 80 wt% of kerosene) in a ratio of 2:1, the mixture was subjected to centrifugal extraction at 25°C for 20 minutes so that a chromium-containing raffinate and a vanadium-rich organic phase were obtained; sulfuric acid was added into the chromium-containing raffinate to adjust the pH value to 3.4, then, to the chromium-containing raffinate, anhydrous sodium sulfite was added in an amount 1.03 times of the theoretical amount, after reacting for 40min, the pH value was adjusted to 7.2 with NaOH, hydrated chromium oxide was obtained by filtration; the vanadium-rich organic phase was fed into the vanadium-rich organic phase storage tank 7 for later use;
(3) the vanadium-rich organic phase in the vanadium-rich organic phase storage tank 7 was fed into the vanadium-rich organic phase washing tank 8 to be contacted with the aqueous phase in the vanadium-rich organic phase washing tank for washing and separation, the washed vanadium-rich organic phase was sent into the strip-extraction and vanadium precipitation kettle 9 for strip-extraction and vanadium precipitation with 200 mL of strip-extraction liquid (containing 2 wt% of NaOH and 0.3 mol/L of (NH₄)₂SO₄) under stirring at 40°C for 60 min, and the mixture was allowed to stand until oil and water were completely separated, thereby an extracted organic phase and a solid-liquid mixture were obtained;
   the extracted organic phase was sent into the extracted organic phase washing tank 16 to be washed and recycled;
   the solid-liquid mixture was sent into the strip-extracted aqueous phase-solid phase storage tank 10, and subjected to separation so that a solid phase and an aqueous phase were obtained;
(4) the solid phase obtained in the strip-extracted aqueous phase-solid phase storage tank 10 was sent into the ammonium metavanadate washing tank 12 for washing, wherein the washing liquid came from the washing liquid storage tank 11, the washed material was fed into the centrifuge 13 for centrifugal separation so that an ammonium metavanadate solid was obtained, and the obtained ammonium metavanadate solid was oven dried in the drying oven 14 at 70°C, followed by calcination in the calcination furnace 15 at 400°C for 2 h, thereby a brick red product vanadium pentoxide (V₂O₅) was obtained.

The vanadium pentoxide (V₂O₅) was determined and analyzed to have a purity of ≥99.9%, a silicon content of 0.004 wt%, an aluminum content of 0.001 wt% and a chromium content of 0.001 wt%.

### Example 3:

This example provides a system for extracting vanadium from a vanadium-chromium-silicon-containing leaching solution and preparing vanadium pentoxide and a processing method therefor:
The system is the same as that in Example 1.

The processing method of the aforesaid system comprises:
(1) a vanadium-chromium-silicon-containing leaching solution was filtered by the first filter 1, 1000 mL of the leaching solution containing pentavalent vanadium, hexavalent chromium and silicon was sent into the impurity removal reaction kettle 2, heated to 70°C at constant temperature, 1.056g of Al(OH)₃ and 0.7g of CaCl₂ were added thereto for desilicification treatment, the reaction was carried out for 50min under stirring, the resulting solution was cooled to room temperature, the pH value thereof was adjusted to 8.0 with sulfuric acid, followed by stirring for 10 min, then the solution was sent into an impurity removal liquid standing tank 3 for standing for 3 h, and subjected to centrifugal separation and filtration by the second filter 4, thererby a stock extract liquid after impurity removal was obtained;
(2) the stock extract liquid after impurity removal was adjusted to a pH value of 3.4 with sulfuric acid, sent into the centrifugal extractor 5 for mixing with a primary amine extractant (containing 15 wt% of N1923, 6 wt% of ethyl p-methylbenzoate and 79 wt% of kerosene) in a ratio of 3:1, the mixture was subjected to centrifugal extraction at 20°C for 30 min so that a chromium-containing raffinate and a vanadium-rich organic phase were obtained; sulfuric acid was added into the chromium-containing raffinate to adjust the pH value to 2.5, then, to the chromium-containing raffinate, anhydrous sodium sulfite was added in an amount 1.2 times of the theoretical amount, after reacting for 30 min, the pH value was adjusted to 8 with NaOH, hydrated chromium oxide was obtained by filtration; the vanadium-rich organic phase was fed into the vanadium-rich organic phase storage tank 7 for later use;
(3) the vanadium-rich organic phase in the vanadium-rich organic phase storage tank 7 was fed into the vanadium-rich organic phase washing tank 8 to be contacted with the aqueous phase in the vanadium-rich organic phase washing tank for washing and separation, the washed vanadium-rich organic phase was sent into the strip-extraction and vanadium precipitation kettle 9 for strip-extraction and vanadium precipitation with 500 mL of strip-extraction liquid (containing 3 wt% of KOH, 0.1 mol/L of NH₄Cl and 0.3 mol/L of (NH₄)₂SO₄) under stirring at 55°C for 60 min, and the mixture was allowed to stand until oil and water were completely separated, thereby an extracted organic phase and a solid-liquid mixture were obtained;
   the extracted organic phase was sent into the extracted organic phase washing tank 16 to be washed and recycled;
   the solid-liquid mixture was sent into the strip-extracted aqueous phase-solid phase storage tank 10, and subjected to separation so that a solid phase and an aqueous phase were obtained;
(4) the solid phase obtained in the strip-extracted aqueous phase-solid phase storage tank 10 was sent into the ammonium metavanadate washing tank 12 for washing, wherein the washing liquid came from the washing liquid storage tank 11, the washed material was fed into the centrifuge 13 for centrifugal separation so that an ammonium metavanadate solid was obtained, and the obtained ammonium metavanadate solid was oven dried in the drying oven 14 at 60°C, followed by calcination in the calcination furnace 15 at 500°C for 2 h, thereby a brick red product vanadium pentoxide (V₂O₅) was obtained.

The vanadium pentoxide (V₂O₅) was determined and analyzed to have a purity of ≥99.9%, a silicon content of 0.003 wt%, an aluminum content of 0.008 wt% and a chromium content of 0.006 wt%.

### Example 4:

This example provides a system for extracting vanadium from a vanadium-chromium-silicon-containing leaching solution and preparing vanadium pentoxide and a processing method therefor:
The system is the same as that in Example 1.

The processing method of the aforesaid system comprises:
(1) a vanadium-chromium-silicon-containing leaching solution was filtered by the first filter 1, 2000 mL of the leaching solution containing pentavalent vanadium, hexavalent chromium and silicon was sent into the impurity removal reaction kettle 2, heated to 80°C at constant temperature, 2.5g of NaOH and 14.66 g of Al₂(SO₄)₃ were added thereto for desilicification treatment, the reaction was carried out for 60min under stirring, the resulting solution was cooled to room temperature, the pH value thereof was adjusted to 8.5 with sulfuric acid, followed by stirring for 15min, then the solution was sent into an impurity removal liquid standing tank 3 for standing for 4 h, and subjected to centrifugal separation and filtration by the second filter 4, thererby a stock extract liquid after impurity removal was obtained;
(2) the stock extract liquid after impurity removal was adjusted to a pH value of 3.0 with sulfuric acid, sent into the centrifugal extractor 5 for mixing with a primary amine extractant (containing 20 wt% of N1923, 7 wt% of diisopropyl succinate and 73 wt% of kerosene) in a ratio of 4:1, the mixture was subjected to centrifugal extraction at 30°C for 40 min so that a chromium-containing raffinate and a vanadium-rich organic phase were obtained; sulfuric acid was added into the chromium-containing raffinate to adjust the pH value to 3.5, then, to the chromium-containing raffinate, anhydrous sodium sulfite was added in an amount 1.4 times of theoretical amount, after reacting for 40 min, the pH value was adjusted to 7.5 with NaOH, hydrated chromium oxide was obtained by filtration; the vanadium-rich organic phase was fed into the vanadium-rich organic phase storage tank 7 for later use;
(3) the vanadium-rich organic phase in the vanadium-rich organic phase storage tank 7 was fed into the vanadium-rich organic phase washing tank 8 to be contacted with the aqueous phase in the vanadium-rich organic phase washing tank for washing and separation, the washed vanadium-rich organic phase was sent into the strip-extraction and vanadium precipitation kettle 9 for strip-extraction and vanadium precipitation with 800 mL of strip-extraction liquid (containing 4 wt% of NaOH, 0.1 mol/L of NH₄Cl and 0.3 mol/L of (NH₄)₂CO₃) under stirring at 60°C for 2 h, and the mixture was allowed to stand until oil and water were completely separated, thereby an extracted organic phase and a solid-liquid mixture were obtained;
   the extracted organic phase was sent into the extracted organic phase washing tank 16 to be washed and recycled;
   the solid-liquid mixture was sent into the strip-extracted aqueous phase-solid phase storage tank 10, and subjected to separation so that a solid phase and an aqueous phase were obtained;
(4) the solid phase obtained in the strip-extracted aqueous phase-solid phase storage tank 10 was sent into the ammonium metavanadate washing tank 12 for washing, wherein the washing liquid came from the washing liquid storage tank 11, the washed material was fed into the centrifuge 13 for centrifugal separation so that an ammonium metavanadate solid was obtained, and the obtained ammonium metavanadate solid was oven dried in the drying oven 14 at 70°C, followed by calcination in the calcination furnace 15 at 450°C for 2 h, thereby a brick red product of vanadium pentoxide (V₂O₅) was obtained.

The vanadium pentoxide (V₂O₅) was determined and analyzed to have a purity of ≥99.9%, a silicon content of 0.001 wt%, an aluminum content of 0.0005 wt% and a chromium content of 0.0002 wt%.

### Comparison Example:

This comparison example provides a method for preparing high-purity V₂O₅ from a vanadium-chromium-containing solution, wherein the vanadium-chromium-containing solution used was the same as that in Example 4, and the process steps were carried out according to the method disclosed in CN 100497675A.

The obtained vanadium pentoxide was determined to have a purity of ≥99.6%, a silicon content of 0.005 wt%, an aluminum content of 0.001 wt% and a chromium content of <0.001 wt%.

As can be seen from the combination of the results of Examples 1-4, according to the present invention, through strengthening the processes of removing silicon and aluminum, selective extraction and strip-extraction, vanadium and chromium are deeply separated, so that a high-purity V₂O₅ with a low content of silicon, aluminum and chromium (the silicon content is <0.005 wt%, the aluminum content is <0.001 wt%, the chromium content is <0.001 wt%, and the V₂O₅ content is ≥99.9%) can be obtained, the quality and value of the product are greatly improved, and the resulting high-purity V₂O₅ can be widely applied to the fields such as catalysts, batteries, aerospace, and electronic elements.

The applicant declares that the present invention illustrates the detailed process equipment and process flow of the present invention by the above examples, but the present invention is not limited to the above detailed process equipment and process flow, that is, it does not mean that the present invention must rely on the above detailed process equipment in order to be implemented. It will be apparent to those skilled in the art that any modifications of the present invention, equivalent substitutions of the materials for the product of the present invention, and additions of auxiliary ingredients, selections of the specific means and the like, are all within the protection and disclosure scopes of the present invention.

## Claims

1. A system for extracting vanadium from a vanadium-chromium-silicon-containing leaching solution and preparing vanadium pentoxide, wherein it comprises an impurity removal system, an extraction system, a strip-extraction and vanadium precipitation system, a washing system and a calcination system in sequence.

2. The system according to claim 1, wherein the impurity removal system comprises a first filter (1), an impurity removal reaction kettle (2), an impurity removal liquid standing tank (3) and a second filter (4) which are connected in sequence, with a liquid outlet of the second filter (4) being configured to connect with a feed inlet of the extraction system.

3. The system according to claim 1 or 2, wherein the extraction system comprises a centrifugal extractor (5), a raffinate storage tank (6) and a vanadium-rich organic phase storage tank (7), with a raffinate outlet of the centrifugal extractor (5) being connected with an inlet of the raffinate storage tank (6), an organic phase outlet of the centrifugal extractor (5) being connected with an inlet of the vanadium-rich organic phase storage tank (7), and a discharge outlet of the vanadium-rich organic phase storage tank (7) being configured to connect with a feed inlet of the strip-extraction and vanadium precipitation system.

4. The system according to any one of claims 1-3, wherein the strip-extraction and vanadium precipitation system comprises a vanadium-rich organic phase washing tank (8), a strip-extraction and vanadium precipitation kettle (9) and a strip-extracted aqueous phase-solid phase storage tank (10), with an organic phase outlet of the vanadium-rich organic phase washing tank (8) being connected with an organic phase inlet of the strip-extraction and vanadium precipitation kettle (9), a liquid-solid mixed phase outlet of the strip-extraction and vanadium precipitation kettle (9) being connected with an inlet of the strip-extracted aqueous phase-solid phase storage tank (10), and a solid outlet of the strip-extracted aqueous phase-solid phase storage tank (10) being configured to connect with a feed inlet of the washing system;
preferably, the washing system comprises a washing liquid storage tank (11), an ammonium metavanadate washing tank (12) and a centrifuge (13), with a liquid outlet of the washing liquid storage tank (11) being connected with an aqueous phase inlet of the ammonium metavanadate washing tank (12), a discharge outlet of the ammonium metavanadate washing tank (12) being connected with a feed inlet of the centrifuge (13), and a solid discharge outlet of the centrifuge (13) being configured to connect with a feed inlet of the calcination system;
preferably, the calcination system comprises a drying oven (14) and a calcination furnace (15) which are connected in sequence.

5. The system according to any one of claims 1-4, wherein the strip-extraction and vanadium precipitation system comprises an extracted organic phase washing tank (16), with an organic phase outlet of the strip-extraction and vanadium precipitation kettle (9) being connected with an organic phase inlet of the extracted organic phase washing tank (16), a liquid outlet of the centrifuge (13) being connected with an aqueous phase inlet of the extracted organic phase washing tank (16), and an aqueous phase outlet of the extracted organic phase washing tank (16) being connected with an aqueous phase inlet of the vanadium-rich organic phase washing tank (8);
preferably, the centrifugal extractor (5) is made of any one or a combination of at least two selected from the group consisting of stainless steel, organic glass, glass, and plastic;
preferably, the calcination furnace (15) is any one or a combination of at least two selected from the group consisting of a fixed bed, a rotary hearth furnace, and a fluidized bed.

6. A method for extracting vanadium from a vanadium-chromium-silicon-containing leaching solution and preparing vanadium pentoxide, wherein it comprises: a vanadium-chromium-silicon-containing leaching solution is subjected to impurity removal treatment, extraction treatment, strip-extraction and vanadium precipitation treatment, washing, drying and calcination in sequence so that vanadium pentoxide is obtained.

7. The method according to claim 6, wherein the impurity removal treatment comprises: a desiliconization agent is added into a filtered leaching solution containing vanadium, chromium and silicon for desiliconization treatment, following the desiliconization treatment, the pH of the solution is adjusted, the solution is allowed to stand, and is filtered again so that a stock extract liquid after impurity removal is obtained;
preferably, the desiliconization agent is an aluminum salt and/or a calcium salt;
preferably, the aluminum salt is any one or a combination of at least two selected from the group consisting of Al₂(SO₄)₃, Al(OH)₃, AlCl₃, and NaAlO₂, preferably any one or a combination of at least two selected from the group consisting of Al₂(SO₄)₃, Al(OH)₃, and AlCl₃;
preferably, the calcium salt is any one or a combination of at least two selected from the group consisting of calcium chloride, calcium hydroxide, and calcium oxide;
preferably, the desiliconization agent is in such an amount that the molar ratio of the aluminum salt and/or the calcium salt to the silicon is from 0.4 : 1 to 2.0 : 1;
preferably, the reaction temperature for the desiliconization treatment is 30°C-90°C; preferably, the reaction time for the desiliconization treatment is 30 min-120 min;
preferably, following the desiliconization treatment, the pH of the solution is adjusted to 7-9; preferably, the standing time is 0-72 h and excludes 0;
preferably, the obtained stock extract liquid after impurity removal has a silicon content of <5 mg/L and an aluminum content of <5 mg/L.

8. The method according to claim 6 or 7, wherein the extraction treatment comprises:
(1) the pH of the stock extract liquid after impurity removal treatment is adjusted, and then a vanadium-rich organic phase and a raffinate are obtained through centrifugal extraction;
(2) after the pH of the raffinate obtained in the step (1) is adjusted, a reducing agent is added for reduction and the pH is adjusted, filtration is conducted, and a solid hydrated chromium oxide is obtained;
preferably, in the step (1), the pH of the stock extract liquid after impurity removal treatment is adjusted to be acidic, preferably 3-7;
preferably, the centrifugal extraction in the step (1) is multistage centrifugal extraction having a stage number of ≥1;
preferably, during the multistage centrifugal extraction, the pH is adjusted before each extraction;
preferably, an extraction organic phase used in the centrifugal extraction in the step (1) comprises an extractant;
preferably, the extraction organic phase used in the centrifugal extraction in the step (1) comprises an extractant in a content of 3 wt%-30 wt%;
preferably, the extraction organic phase used in the centrifugal extraction in the step (1) further comprises a phase regulator and/or a diluent;
preferably, the extraction organic phase used in the centrifugal extraction in the step (1) comprises a phase regulator in a concentration of 2 wt%-10 wt%;
preferably, the extraction organic phase employed in the centrifugal extraction in the step (1) comprises a diluent in a concentration of 60 wt%-95 wt%;
preferably, the extractant is a neutral extractant and/or an alkaline extractant;
preferably, the extractant is any one or a combination of at least two selected from the group consisting of a phosphorus-oxygen-containing extractant, an ester extractant, an amine extractant, and an oxime extractant;
preferably, the extractant is any one or a combination of at least two selected from the group consisting of TBP, LK-N21, JMT, N1923, N116, 7101, LIX 63, and LIX 984;
preferably, the phase regulator is an ester phase regulator and/or an alcohol phase regulator;
preferably, the phase regulator is any one or a combination of at least two selected from the group consisting of hexyl acetate, amyl acetate, ethyl p-methylbenzoate, tert-butyl acetate, diisopropyl succinate, tributyl phosphate, isooctyl alcohol, n-amyl alcohol, n-octyl alcohol, and heptyl alcohol;
preferably, the diluent is a non-polar solvent, preferably any one or a combination of at least two selected from the group consisting of kerosene, toluene, and n-hexane;
preferably, the diluent is any one or a combination of at least two selected from the group consisting of sulfonated kerosene, cyclopentane, n-pentane, cyclohexane, n-hexane, benzene, toluene, xylene, chloroform, and carbon tetrachloride;
preferably, the volume ratio of the organic phase to the aqueous phase in the centrifugal extraction in the step (1) is (10-1):(1-10), preferably (4-1):(1-4);
preferably, the temperature for the centrifugal extraction in the step (1) is 0-40°C, preferably 10-40°C;
preferably, the equilibrium pH for the centrifugal extraction in the step (1) is 3-9, preferably 6.5-9;
preferably, the time for the centrifugal extraction in the step (1) is 3 min-60 min.

9. The method according to any one of claims 6-8, wherein the strip-extraction and vanadium precipitation treatment comprises the following steps:
(a) the vanadium-rich organic phase obtained by the extraction treatment is subjected to strip-extraction and vanadium precipitation treatment by using a stripping agent, and an extracted organic phase and a solid-liquid mixture are obtained;
(b) the solid-liquid mixture obtained in the step (a) is subjected to centrifugal separation so that ammonium metavanadate is obtained;
preferably, the stripping agent in the step (a) comprises an alkaline solution;
preferably, the alkaline solution is any one or a combination of at least two selected from the group consisting of a sodium hydroxide solution, a potassium hydroxide solution, a calcium hydroxide solution, and aqueous ammonia;
preferably, the molar ratio of hydroxy radicals in the alkaline solution to vanadium in the vanadium-rich organic phase is (0-5):1 and excludes 0, preferably (1-2):1;
preferably, the stripping agent in the step (a) further comprises an ammonium salt;
preferably, the ammonium salt is any one or a combination of at least two selected from the group consisting of ammonium carbonate, ammonium sulfate, and ammonium chloride;
preferably, the ammonium salt is added in such an amount that the molar ratio of ammonium ions to vanadium in the vanadium-rich organic phase is (0-1): 1, preferably (0-0.8): 1;
preferably, when the alkaline solution in the stripping agent is aqueous ammonia, the ammonium salt is added in such an amount that the molar ratio of the aqueous ammonia to the ammonium ions is (0.2-5):1, preferably (0.5-3):1;
preferably, the volume ratio of the vanadium-rich organic phase to the stripping agent in the step (a) is (1-10): 1;
preferably, the temperature for the strip-extraction and vanadium precipitation treatment in the step (a) is 20°C-70°C;
preferably, the time for the strip-extraction and vanadium precipitation treatment in the step (a) is 0.5 h-5 h.

10. The method according to any one of claims 6-9, wherein the washing is multiple washing with the washing times being ≥1;
preferably, the washing is centrifugal washing;
preferably, a washing liquid used in the washing is an inorganic washing liquid and/or an organic washing liquid;
preferably, the inorganic washing liquid is an aqueous solution of any one or at least two selected from the group consisting of (NH₄)₂SO₄, NH₄Cl, (NH₄)₂CO₃ and NH₄NO₃;
preferably, the organic washing liquid is any one or a combination of at least two selected from the group consisting of methyl alcohol, toluene, ethylalcohol, ethylbenzene, acetone, and ethyl ether;
preferably, the washing liquid has a concentration of 0-0.4 mol/L;
preferably, the washing liquid used during each washing is in an amount of 0.5-1 time of that of the stripping agent.

11. The method according to any one of claims 6-10, wherein the drying temperature is 60°C-150°C;
preferably, the drying is air drying and/or oven drying;
preferably, the drying time is 0-120 min;
preferably, the calcination temperature is 200°C-600°C;
preferably, the calcination time is 1 h-4 h;
preferably, a gas is introduced during the calcination;
preferably, the gas is any one or a combination of at least two selected from the group consisting of air, oxygen, and nitrogen;
preferably, the obtained vanadium pentoxide has a purity of ≥99.9 wt%, wherein the silicon content is <0.005 wt%, the aluminum content is <0.001 wt%, and the chromium content is <0.001 wt%.

12. The method according to any one of claims 6-11, wherein the vanadium-chromium-silicon-containing leaching solution is any one or a combination of at least two selected from the group consisting of a vanadium-chromium-containing slag leaching solution, a vanadium-containing waste leaching solution, and a vanadium-containing plant wastewater;
preferably, in the vanadium-chromium-silicon-containing leaching solution, a content of vanadium element is >2 g/L, a content of chromium element is <10 g/L and a content of silicon element is <10 g/L.
